# EUROPÄISCHE PATENTANMELDUNG

(11) **EP 1 186 706 A2**
(43) Veröffentlichungstag der Anmeldung: **13.03.2002**
(21) Anmeldenummer: 01119933.8
(22) Anmeldetag: 17.08.2001
(51) Int. Cl.: D21H 23/78, D21C 9/10, D21C 5/02

(54) **Faser- oder Papierbehandlung**

(30) Priorität: 06.09.2000 DE 10043893
(71) Anmelder: Voith Paper Patent GmbH, 89522 Heidenheim (DE)
(72) Erfinder: Gehr, Volker, Dr., 88225 Baienfurt (DE); Reinholdt, Boris, 88289 Waldburg (DE); Hess, Harald, 88287 Grünkraut (DE); Albrecht, Falk, 88410 Bad Wurzach (DE); Britz, Herbert, 88250 Weingarten (DE); Kemper, Martin, 88250 Weingarten (DE)
(74) Vertreter: Manitz, Finsterwald & Partner GbR

(57) **Zusammenfassung**

Bei einem Verfahren zur Durchführung eines der Faser- oder Papierherstellung dienenden Flotations-, Bleiche- und/oder Dispergierprozesses unter Anwendung einer oder mehrerer Verfahrensstufen, in denen durch vorgebbare chemische und physikalische Abläufe definierte Prozeßschritte durchgeführt und Prozeßoptimierungen in Abhängigkeit von Meßwerten und daraus gebildeten Kenngrößen, ggf. unter Verwendung von Zustandsmodellen, vorgenommen werden, werden zumindest die die Zielgrößen des jeweiligen Endproduktes des Verfahrens relevant beeinflussenden Meßwerte wenigstens einer Verfahrensstufe online erfaßt und/oder die aus den Meßwerten wenigstens einer Verfahrensstufe ermittelten Kenngrößen online ausgewertet und direkt oder indirekt zur Steuerung bzw. Optimierung wenigstens eines Prozesses verwendet. Dabei werden Kenngrößen in Abhängigkeit von den Ausgangsmaterialien bzw. Rohstoffen und/oder von den in wenigstens einer Verfahrensstufe zugeführten Chemikalien, Hilfsstoffen, Energien und/oder zu entsorgenden Materialien und Emissionen gebildet.

## Beschreibung

Die Erfindung betrifft ein Verfahren zur Durchführung eines der Faser- oder Papierherstellung dienenden Flotations-, Bleiche- und/oder Dispergierprozesses unter Anwendung einer oder mehrerer Verfahrensstufen, in denen durch vorgebbare chemische und physikalische Abläufe definierte Prozeßschritte durchgeführt und Prozeßoptimierungen in Abhängigkeit von Meßwerten und daraus gebildeten Kenngrößen, ggf. unter Verwendung von Zustandsmodellen, vorgenommen werden.

Bei der Faser- oder Papierherstellung wird durch einen jeweiligen Flotationsprozeß der Gutstoff, d. h. die Faserstoffsuspension, vom Rejekt getrennt, bei dem es sich um Flotationsschaum handelt, der in der Regel noch geringe Teile der Faserstoffsuspension enthält. Dabei können beispielsweise eine oder mehrere sogenannte Flotationszellen zum Einsatz kommen, die insbesondere dem Entfernen von Verunreinigungen, insbesondere Druckfarbenpartikel, aus Papierfasersuspensionen, insbesondere Suspensionen aus Altpapier, dienen. Weitere typische Verunreinigungen sind z.B. Stickies (insbesondere klebrige Substanzen). In einem anderen bekannten Flotationsverfahren, der Mikroflotation, werden z.B. Füllstoffe und Strichpartikel aus Papier- oder Kartonmaschinensiebfiltraten zurückgewonnen. Bei einer sogenannten Deinkingflotation werden Druckfarben und andere hydrophobe (wasserabstoßende) Partikel, wie z. B. Kleber, aus der Altpapiersuspension mit Hilfe von Luftblasen und geeigneten Prozeßchemikalien entfernt.

Eine Flotation zeichnet sich in der Regel dadurch aus, daß die Suspension mit Luft und eventuellen Hilfsmitteln (z.B. Seife, Tenside) versetzt wird und den Luftblasen mit den anhaftenden Verunreinigungen in einem Reaktionsgefäß die Gelegenheit gegeben wird, nach oben aufzusteigen.

Bei Flotationen von Schäumen (Primärüberläufen) kann die Überlaufrate aufgrund eines hohen Druckfarben- und Aschegehalts bis zu 80% betragen. Die Überlaufrate für Suspensionen ist außer vom Aschegehalt der jeweiligen Suspension insbesondere auch vom jeweiligen Anteil an ölbasierenden Druckfarben abhängig. Dabei ergeben sich Suspensionen mit hohem Anteil an ölbasierenden Druckfarben insbesondere bei Zeitungspapieren und Illustrierten und solche mit niedrigem Anteil an ölbasierenden Druckfarben insbesondere bei Laserdruck und Büroabfällen.

Die den Flotationsprozeß betreffenden Einflußgrößen können unterschieden werden in aus dem Rohstoff stammende und nicht beeinflußbare Größen, wie z. B. Art der Farbpartikel, Aschegehalt usw., und prozeßtechnisch in der Flotation beeinflußbare Größen, wie z. B. Rejektmenge, Luftgehalt, Blasengröße, Chemikalien, usw.

Bisher war es üblich, zweckmäßige Werte für diese Parameter durch Versuche zu vermitteln und dann bis auf weiteres beizubehalten. So werden bei den bisherigen Flotationsanlagen üblicherweise insbesondere die folgenden Regelstrategien angewandt:
- Konstanthaltung des Zelleniveaus, wobei ein Niveau- oder Drucktransmitter in der Zelle eine Stellgröße für die Gutstoffklappe der Flotationsanlage beeinflußt;
- Konstanthaltung des Niveaus in dem Schaumrohr bzw. in der Schaumrinne, wobei ein Niveau- oder Drucktransmitter in der Schaumrinne bzw. im Schaumrohr eine Stellgröße für die Gutstoffklappe der Flotationsanlage beeinflußt;
- Konstanthaltung des Niveaus im Schaumtank, wobei ein Niveau- oder Drucktransmitter im Schaumtank eine Stellgröße für die Gutstoffklappe der Flotationsanlage beeinflußt;
- Konstanthaltung der Differenz zwischen dem Zulauf- und dem Gutstoffvolumenstrom, wobei die Differenz zwischen den durch einen Zulauf- bzw. einen Durchlauf-IDM (IDM = induktiver Durchflußmesser) erhaltenen Werte eine Stellgröße für die Gutstoffklappe er Flotationsanlage beeinflußt.

Im letzteren Fall wird also ausgehend von einem konstantem Durchfluß lediglich dafür gesorgt, daß eine einmal ermittelte Aufteilung in die beiden Fraktionen Gutstoff und Rejekt beibehalten wird, d. h. ein vorgegebener Volumenstrom als Rejekt abgezogen wird.

Eine solche Durchlaufregelung mag zwar einfach durchzuführen sein, sie läßt jedoch die in der Praxis auftretenden Schwankungen außer Betracht. Bei schwankenden Rohstoffen, schwankenden Zulaufvolumenströmen und/oder schwankenden Zulaufstoffdichten ändern sich nun aber sowohl der Feststoffverlust als auch die Qualität des Gutstoffes.

Im Hinblick auf eine optimale Regelung insbesondere einer Flotationsanlage besteht daher allgemein das Bedürfnis nach einer Konstanthaltung der Qualität (z. B. Weißgrad, Helligkeit, Schmutzpunkte oder Aschegehalt), einer Konstanthaltung des Feststoffverlustes und/oder einer Minimierung der Betriebskosten bei konstanter Qualität (z. B. durch Veränderung der Seifendosierung und des Feststoffverlustes).

Was insbesondere die Regelung über Flotation, Bleiche(n) und Dispergierung betrifft, werden bisher die einzelnen Prozeßschritte, d. h. also beispielsweise Flotation, Dispergierung und Bleiche, in einer Altpapierstoffaufbereitung für eine Optimierung manuell eingestellt. Dabei wird für eine Optimierung bisher jede Prozeßstufe unter den Gesichtspunkten einer Massenoptimierung einzeln betrachtet. Eine entsprechende Optimierung umfaßt beispielsweise das Einstellen eines bestimmten Sollweißgrades oder einer bestimmten Verlustmenge (Ausbeute). Eine Kombination aus mehreren Zielgrößen existiert bisher in der Regel nicht. Es gibt sie bisher insbesondere auch dann nicht, wenn innerhalb einer Stoffaufbereitung mehrere hintereinander ablaufende Prozeßschritte vorliegen.

Es besteht daher insbesondere auch ein Bedürfnis nach einer optimierten Regelung einer entsprechenden Prozeßbausteinkombination.

Der Erfindung liegt daher allgemein die Aufgabe zu Grunde, ein verbessertes Verfahren der eingangs genannten Art zu schaffen, mit dem die zuvor genannten Probleme beseitigt und die angesprochenen Ziele erreicht werden.

Gemäß einem ersten Aspekt der Erfindung wird diese Aufgabe dadurch gelöst, daß zumindest die die Zielgrößen des jeweiligen Endproduktes des Verfahrens relevant beeinflussenden Meßwerte wenigstens einer Verfahrensstufe online erfaßt und/oder die aus den Meßwerten wenigstens einer Verfahrensstufe ermittelten Kenngrößen online ausgewertet und direkt oder indirekt zur Steuerung bzw. Optimierung wenigstens eines Prozesses verwendet werden, wobei Kenngrößen in Abhängigkeit von den Ausgangsmaterialien bzw. Rohstoffen und/oder von den in wenigstens einer Verfahrensstufe zugeführten Chemikalien, Hilfsstoffen, Energien und/oder zu entsorgenden Materialien und Emissionen gebildet werden.

Ein solches Verfahren ist insbesondere bei der Regelung einer Flotationsanlage mit Vorteil anwendbar, wodurch diese insbesondere im Hinblick auf eine Konstanthaltung der Qualität (z. B. Weißgrad, Helligkeit, Schmutzpunkte oder Aschegehalt), eine Konstanthaltung des Feststoffverlustes und/oder eine Minimierung der Betriebskosten bei konstanter Qualität (z. B. durch Veränderung der Seifendosierung und des Feststoffverlustes) entsprechend optimierbar ist.

Die Ermittlung der Kenngrößen aus den Online-Meßwerten kann insbesondere unter Verwendung mathematischer oder betriebswirtschaftlicher Algorithmen erfolgen.

Insbesondere bei der Durchführung eines Flotationsprozesses ist es auch von Vorteil, wenn zur Ermittlung wenigstens eines Teil der Meßwerte und Kenngrößen rohstoffspezifische Größen erfaßt werden.

Gemäß einer zweckmäßigen, mit Vorteil insbesondere wieder bei der Durchführung eines Flotationsprozesses anwendbaren Ausgestaltung des erfindungsgemäßen Verfahrens wird zur Ermittlung wenigstens eines Teils der Meßwerte und Kenngrößen vorzugsweise zumindest eine der folgenden Größen erfaßt: meßbare Größen, wie Aschegehalt, Stoffdichte, optische Eigenschaften, Schmutzpunkte, Restdruckfarben, pH-Werte, Temperaturen, Durchflüsse, Ströme, Leistungen, Füllstände, Hilfsmitteleinsatz und/oder Stickies im Zulauf, Gutstoff und/oder Rejekt und/oder aus den meßbaren Größen errechnete Größen (Kenngrößen), wie Weißgradsteigerung, Reaktions- oder Durchlaufzeiten, spezifische Arbeit, Feststoffverlust und/oder Ascheverlust und/oder betriebswirtschaftliche Größen, wie Chemikalien-, Hilfsmittel-, Wasser-, Rohstoff-, Energie, Verlust- und/oder Entsorgungskosten und/oder errechnete Größen, die die technologischen und betriebswirtschaftlichen Größen in Beziehung setzen.

Die in die Regelung eingehenden Größen können somit beispielsweise in vier Kategorien aufgeteilt werden: technologische meßbare Größen, technologische Kenngrößen, die mit Hilfe von Rechenoperationen aus den technologischen Meßwerten ermittelt werden, betriebswirtschaftliche Kennzahlen, die z.B. in "DM Chemikalien pro Punkt Weißgradgewinn" ausgedrückt werden können.

Als Zielgrößen können insbesondere die Maximierung, Minimierung und/oder Konstanthaltung der Produktionsmengen, der mechanischen und/oder optischen Eigenschaften und/oder der Betriebs-, Rohstoff- und/oder Fertigstoffkosten vorgegeben werden.

Insbesondere bei der Durchführung eines Flotationsprozesses ist es auch von Vorteil, wenn als Zielgrößen vorzugsweise zumindest eine der folgenden Größen vorgegeben wird: konstante Qualität des jeweiligen Endproduktes des Verfahrens, konstanter Feststoffverlust und/oder minimale Betriebskosten insbesondere bei konstanter Qualität.

Gemäß einer weiteren, mit Vorteil insbesondere wieder zur Steuerung bzw. Optimierung des Flotationsprozesses anwendbaren Ausgestaltung wird vorzugsweise zumindest eine der folgenden Prozeßparameter entsprechend beeinflußt: Luftgehalt der Papierfaserstoffsuspension in wenigstens einer Verfahrensstufe, insbesondere in einer Primär- und/oder in einer Sekundärstufe, Blasengröße, Chemikalien und/oder dergleichen.

Von Vorteil ist auch, wenn insbesondere rohstoffbedingte Schwankungen der die Zielgrößen des jeweiligen Endproduktes des Verfahrens relevant beeinflussenden Kenngrößen durch entsprechendes Ändern wenigstens eines Prozeßparameters zumindest im wesentlichen kompensiert werden. Dabei kann es zweckmäßig sein, wenn insbesondere zur Steuerung bzw. Optimierung wenigstens eines Prozesses über eine entsprechende Beeinflussung mehrerer Prozeßparameter zumindest ein Teil der Kenngrößen bewertet oder gewichtet wird und die jeweilige Beeinflussung der Prozeßparameter in Abhängigkeit von den gewerteten bzw. gewichteten Kenngrößen erfolgt.

Außer dem Flotationsprozeß wurden eingangs beispielsweise auch der Bleiche- und der Dispergierprozeß genannt.

Gemäß einem weiteren Aspekt der Erfindung können wenigstens zwei Verfahrensstufen und/oder wenigstens zwei Prozesse miteinander kombiniert und zu einem jeweiligen gemeinsam gesteuerten und gemeinsam optimierten Moduls zusammengefaßt werden.

Mit einer solchen Ausgestaltung ist insbesondere auch eine optimale Regelung einer Prozeßbausteinkombination möglich.

Insbesondere im Fall eines solchen gemeinsam gesteuerten und gemeinsam optimierten Moduls kann zweckmäßigerweise eine komprimierte bzw. reduzierte Anzahl von in einem jeweiligen Modul gebildeten Kenngrößen zur Steuerung eines bzw. mehrerer Prozesse verwendet werden.

Gemäß einer bevorzugten praktischen Ausgestaltung des erfindungsgemäßen Verfahrens wird zumindest ein Teil der Ziel- und Kenngrößen mittels eines Rechenwerks auf eine einheitliche Basis transformiert. Als einheitliche Basis kann insbesondere der Preis pro Mengeneinheit gewählt werden.

Insbesondere im Fall kombinierter Verfahrensstufen und/oder kombinierter Prozesse wird als Zielgrößen vorzugsweise zumindest eine der folgenden Größen vorgegeben: konstante optische Eigenschaften (z. B. Weißgrad), konstante Aschemenge, minimale und/oder konstante Schmutzpunkte, minimale Verluste, minimaler Einsatz von Chemikalien und/oder minimaler Energieeintrag.

Vorteilhafterweise wird zumindest ein Teil der Zielgrößen vor deren Verwendung zur Steuerung und Optimierung des bzw. der Prozesse gewichtet. Dabei ist es von Vorteil, wenn die Gewichtung über eine Bewertung nach Kostengesichtspunkten und/oder die Durchführung einer Kostenoptimierung erfolgt.

Gemäß einer insbesondere wieder bei kombinierten Verfahrensstufen und/oder kombinierten Prozessen anwendbaren vorteilhaften Ausgestaltung des erfindungsgemäßen Verfahrens wird zur Ermittlung wenigstens eines Teils der Meßwerte und Kenngrößen vorzugsweise zumindest eine der folgenden Größen erfaßt: Stoffdichten, Aschekonzentrationen, Füllstände, Überlaufmengen, Restdruckfarbenmengen, Restperoxidmengen, Temperaturen, pH-Werte, Dispergierarbeiten, Faserdimensionen, Chemikaliendosierungen, Verweilzeiten, optische Eigenschaften, mechanische Eigenschaften.

Zur Prozeßdurchführung wird vorzugsweise eine elektronische Steuer- und/oder Regeleinrichtung verwendet. Eine solche Steuer- bzw. Regeleinrichtung besitzt dann die zur betreffenden Prozeßoptimierung erforderliche Software.

Zweckmäßigerweise wird das jeweils verifizierte technologische Prozeß-Know-how in die Steuer- bzw. Regeleinrichtung integriert.

Mittels der Steuer- bzw. Regeleinrichtung wird unter Einbeziehung des jeweiligen technologischen Know-hows vorzugsweise wiederholt insbesondere eine Kostenoptimierung durchgeführt. Die betreffende Zykluszeit kann beispielsweise in einer Größenordnung von einigen Sekunden, z. B. in einem Bereich von etwa 3 bis etwa 10 Sekunden, liegen. Je nach den jeweiligen Gegebenheiten sind jedoch auch andere Zykluszeiten denkbar.

Gemäß einer zweckmäßigen praktischen Ausgestaltung erfolgt die Ermittlung zumindest eines Teils der Meßwerte und Kenngrößen über wenigstens einen Sensor, insbesondere wenigstens einen Sensor zur Weißgradmessung, Online-Schmutzmessung, Stoffdichtemessung, Durchflußmessung und/oder Niveaumessung.

Die Erfindung wird im folgenden anhand von Ausführungsbeispielen näher erläutert.

Zur Optimierung der Regelung einer Flotationsanlage kann als Versuchsmaschine beispielsweise jeweils eine einstufige Labor-Flotationszelle der zuvor beschriebenen Art verwendet werden.

### 1. Beispiel:

### Rohstoff: 100% Zeitung/Illustrierte mit 12% Aschegehalt (überwiegend nicht brennbare Papierfüllstoffe)

Der Stoff wird so in einer Flotationszelle behandelt, daß das vorhandene Weißgradpotential auf wirtschaftliche Weise ausgenutzt wird, wobei sich eine Weiße von z. B. 56% ISO ergibt. Dazu muß, wie entsprechende Versuche gezeigt haben, ein Schaumüberlauf von beispielsweise etwa 8% eingestellt werden, wobei dieser Wert feststoffbezogen, also in "otro-%", angegeben ist. Ändert sich beim Rohstoff der Aschegehalt auf 20%, z. B. durch mehr füllstoffhaltige Illustrierte, so muß der Überlauf z. B. auf 13 otro-% gesteigert werden.

Wenn also in einem Prozeßmodel abgespeichert ist, wie infolge des Aschegehalts die Überlaufmenge einzustellen ist, kann diese Einstellung ständig an den Rohstoff optimal angepaßt werden.

### 2. Beispiel:

### Rohstoff: Büroabfälle

Der Rohstoff soll ebenfalls wieder einen Aschegehalt von beispielsweise 12% besitzen. Dieser kann aber aufgrund der anderen Druckfarbenzusammensetzung bereits mit einem Überlauf von z.B. 5 otro-% den technisch sinnvollen Weißgrad erreichen. In Folge des besseren, teureren Rohstoffes ist dieser mit 72% ISO sogar höher. Ändert sich der Aschegehalt des Rohstoffes auf beispielsweise 20%, so wird der Überlauf auf beispielsweise 8 otro-% eingeregelt.

Das entsprechende Prinzip, nach dem rohstoffbedingte Schwankungen durch Parameteränderungen kompensiert werden, wäre z. B. auch bei den übrigen, zuvor genannten Einflußgrößen durchführbar, wobei grundsätzlich auch beliebige Kombinationen dieser Einflußgrößen denkbar sind. Bei einer Kombination wären die einzelnen Zielvorgaben, z. B. geforderter Weißgrad, geringe Chemikalienkosten, sonstige Prozeßkostensenkung, und/oder dergleichen, zweckmäßigerweise zu bewerten.

Im folgenden werden einige Ausführungsbeispiele insbesondere für eine optimale Regelung einer Prozeßbausteinkombination beschrieben, wobei es sich bei den Einzelprozeßschritten beispielsweise um eine Flotation, Dispergierung und Bleiche(n) beispielsweise bei der Altpapierstoffaufbereitung handeln kann.

Um die betreffenden Ziele zu erreichen, können die jeweiligen Parameter insbesondere auf eine einheitliche Basis (Kosten je Menge) umgerechnet werden. Die zu erreichenden Ziele können beispielsweise die folgenden sein:
- konstante optische Eigenschaften (z. B. Weißgrad)
- konstante Aschemenge
- minimale und/oder konstante Schmutzpunkte
- minimale Verluste
- minimaler Chemikalieneinsatz
- minimaler Energieeintrag.

Eine Gewichtung der Ziele erfolgt beispielsweise über die Bewertung nach Kostengesichtspunkten und die Durchführung einer Kostenoptimierung.

In der betreffenden Anlage kann beispielsweise das weiter unten beschriebene Know-how verifiziert und in die Regelung integriert werden. Dabei führt die Regelung beispielsweise entsprechend einer Zykluszeit von etwa 3 bis etwa 10 Sekunden ständig eine Kostenoptimierung unter Einbeziehung des technologischen Know-hows aus.

Die Erfassung der einzelnen Parameter kann über handelsübliche Sensoren (z. B. Sensoren zur Weißgradmessung, Online-Schmutzpunktmessung, Stoffdichtemessung, Durchflußmessung und/oder Niveaumessung) und/oder in Kombination mit speziellen bzw. neu zu entwickelnden Sensoren erfolgen.

Bezüglich der Verluste lassen sich beispielsweise Rohstoffkosten je Menge und Entsorgungskosten je Menge angeben. Daraus ergeben sich für jeden Prozentpunkt definierte Kosten je Menge. Bei der Flotation ergibt sich eine in der Regel nichtlineare und in ihrer Variation limitierte Abhängigkeit der Verluste zum Weißgrad.

Zu den weiteren möglichen Maschinen zählen beispielsweise Wäscher.

Bei den Kosten für die betreffenden Bleichchemikalien sind beispielsweise Kosten für Wasserstoffperoxid, Natronlauge, Wasserglas und/oder dergleichen zu berücksichtigen. Aus den jeweiligen Kosten je Menge und den betreffenden Prozentpunkten Verlust lassen sich wieder die jeweiligen Verlustkosten bestimmen. Dasselbe gilt beispielsweise auch im Zusammenhang mit einem eventuell eingesetzten Natriumdithionit.

Der Weißgradgewinn in den einzelnen Bleichstufen ist nicht proportional zu den eingesetzten Bleichchemikalienmengen. Das Bleichpotential von Fasern ist limitiert. Druckfarben und Asche (anorganische Bestandteile) können nicht gebleicht werden. Diese halten vielmehr ein gewissen Vergrauungsniveau aufrecht.

Betrachtet man beispielsweise die Dispergierenergie und geht man beispielsweise von einer Kreislauftemperatur von 45 °C und einer Dispergiertemperatur von 80 °C aus, so muß die Temperatur in der Heizschnekke um beispielsweise 35 °C angehoben werden. Dazu werden bei beispielsweise 25% Stoffdichte (stoffdichteabhängig!) beispielsweise etwa 0,3 t Sattdampf pro t Faserstoff verbraucht. Ausgehend von den jeweiligen Sattdampfkosten pro Menge ergeben sich dann die konkreten Sattdampfkosten für den vorliegenden Sattdampfverbrauch.

Die spezifische Energie der Dispergierung beträgt beispielsweise etwa 80 kWh/t. Aus dem jeweiligen kWh-Preis ergeben sich die betreffenden Kosten je Menge. Je mehr spezifische Energie bei der Dispergierung eingesetzt wird, desto kleiner (unsichtbarer) werden die Schmutzpunkte. Sind allerdings im Einlauf viele Schmutzpunkte vorhanden, so ist auch die Vergrauung (Weißgradverlust) stärker. Eventuell werden bei hohen Druckfarbenkonzentrationen diese Partikel nicht abgelöst, sondern noch fester in den Faserstoff eingerieben.

Zu den möglichen Parametern zählen beispielsweise die folgenden:
- Stoffdichte
- Aschekonzentrationen
- Füllstände
- Überlaufmengen
- Restdruckfarbenmengen
- Restperoxidmengen
- pH-Werte
- Dispergierarbeiten
- Faserdimensionen
- Chemikaliendosierungen
- Verweilzeiten
- optische Eigenschaften
- mechanische Eigenschaften

### 1. Beispiel:

Hier wird ein jeweiliger Vergleich für einen Rohstoff angestellt.

Die Flotation 1 wird mit unterschiedlichen Verlusten gefahren, wodurch sich im Fall der niedrigen Verluste ein größerer Weißgradverlust im Disperger ergibt, da mehr Druckfarben vorhanden sind. Die anschließende Bleiche führt in beiden Fällen zu einer gleichen Weißgradsteigerung. In der Flotation 2 werden natürlich aus dem Stoff, der in der Flotation 1 mit einer höheren Ausbeute gefahren wurde, mehr Verluste gefahren. Trotzdem können nicht alle Druckfarben entfernt werden, da der Disperger diese teilweise in den Stoff eingeknetet hat. Erst durch eine zusätzliche reduktive Bleiche kann das Weißgraddefizit ausgeglichen werden.

### 2. Beispiel:

Hier werden zwei unterschiedliche Rohstoffe verglichen.

Obwohl die Flotation 1 mit gleichen Verlusten arbeitet, bleibt die Weißgraddifferenz erhalten. Im Disperger führt das Mehr an Druckfarben zu einem deutlichen Weißgradverlust. Daher wird in der Bleiche 1 die doppelte Menge Bleichchemikalien dosiert. Eine weitere Angleichung findet in der Flotation 2 statt. Auf die reduktive Bleiche wird verzichtet, da die hier gewonnenen Weißgradpunkte nicht notwendig sind, um den Zielweißgrad zu erreichen und kostenmäßig schlechter zu erreichen sind, als durch die oxidative Bleiche.

## Patentansprüche

1. Verfahren zur Durchführung eines der Faser- oder Papierherstellung dienenden Flotations-, Bleiche- und/oder Dispergierprozesses unter Anwendung einer oder mehrerer Verfahrensstufen, in denen durch vorgebbare chemische und physikalische Abläufe definierte Prozeßschritte durchgeführt und Prozeßoptimierungen in Abhängigkeit von Meßwerten und daraus gebildeten Kenngrößen, ggf. unter Verwendung von Zustandsmodellen, vorgenommen werden,
**dadurch gekennzeichnet,**
**daß** zumindest die die Zielgrößen des jeweiligen Endproduktes des Verfahrens relevant beeinflussenden Meßwerte wenigstens einer Verfahrensstufe online erfaßt und/oder die aus den Meßwerten wenigstens einer Verfahrensstufe ermittelten Kenngrößen online ausgewertet und direkt oder indirekt zur Steuerung bzw. Optimierung wenigstens eines Prozesses verwendet werden, wobei Kenngrößen in Abhängigkeit von den Ausgangsmaterialien bzw. Rohstoffen und/oder von den in wenigstens einer Verfahrensstufe zugeführten Chemikalien, Hilfsstoffen, Energien und/oder zu entsorgenden Materialien und Emissionen gebildet werden.

2. Verfahren nach Anspruch 1,
**dadurch gekennzeichnet,**
**daß** die Ermittlung der Kenngrößen aus den Online-Meßwerten unter Verwendung mathematischer oder betriebswirtschaftlicher Algorithmen erfolgt.

3. Verfahren nach Anspruch 1 oder 2,
**dadurch gekennzeichnet,**
**daß** insbesondere bei der Durchführung eines Flotationsprozesses zur Ermittlung wenigstens eines Teils der Meßwerte und Kenngrößen rohstoffspezifische Größen erfaßt werden.

4. Verfahren nach einem der vorhergehenden Ansprüche,
**dadurch gekennzeichnet,**
**daß** insbesondere bei der Durchführung eines Flotationsprozesses zur Ermittlung wenigstens eines Teils der Meßwerte und Kenngrößen vorzugsweise zumindest eine der folgenden Größen erfaßt wird: meßbare Größen, wie Aschegehalt, Stoffdichte, optische Eigenschaften, Schmutzpunkte, Restdruckfarben, pH-Werte, Temperaturen, Durchflüsse, Ströme, Leistungen, Füllstände, Hilfsmitteleinsatz und/oder Stickies im Zulauf, Gutstoff und/oder Rejekt und/oder aus den meßbaren Größen errechnete Größen (Kenngrößen), wie Weißgradsteigerung, Reaktions- oder Durchlaufzeiten, spezifische Arbeit, Feststoffverlust und/oder Ascheverlust und/oder betriebswirtschaftliche Größen, wie Chemikalien-, Hilfsmittel-, Wasser-, Rohstoff-, Energie, Verlust- und/oder Entsorgungskosten und/oder errechnete Größen, die die technologischen und betriebswirtschaftlichen Größen in Beziehung setzen.

5. Verfahren nach einem der vorhergehenden Ansprüche,
**dadurch gekennzeichnet,**
**daß** als Zielgrößen die Maximierung, Minimierung und/oder Konstanthaltung der Produktionsmerigen, der mechanischen und/oder optischen Eigenschaften und/oder der Betriebs-, Rohstoff- und/oder Fertigstoffkosten vorgegeben werden.

6. Verfahren nach einem der vorhergehenden Ansprüche,
**dadurch gekennzeichnet,**
**daß** insbesondere bei der Durchführung eines Flotationsprozesses als Zielgrößen vorzugsweise zumindest eine der folgenden Größen vorgegeben wird: konstante Qualität des jeweiligen Endproduktes des Verfahrens, konstanter Feststoffverlust und/oder minimale Betriebskosten insbesondere bei konstanter Qualität.

7. Verfahren nach einem der vorhergehenden Ansprüche,
**dadurch gekennzeichnet,**
**daß** insbesondere zur Steuerung bzw. Optimierung des Flotationsprozesses vorzugsweise zumindest einer der folgenden Prozeßparameter entsprechend beeinflußt wird: Luftgehalt der Papierfaserstoffsuspension in wenigstens einer Verfahrensstufe, insbesondere in einer Primär- und/oder in einer Sekundärstufe, Überlaufvolumenstrom in wenigstens einer Verfahrensstufe, insbesondere in einer Primär- und/oder in einer Sekundärstufe, Blasengröße, Chemikalien und/oder dergleichen.

8. Verfahren nach einem der vorhergehenden Ansprüche,
**dadurch gekennzeichnet,**
**daß** insbesondere rohstoffbedingte Schwankungen der die Zielgrößen des jeweiligen Endproduktes des Verfahrens relevant beeinflussenden Kenngrößen durch entsprechendes Ändern wenigstens eines Prozeßparameters zumindest im wesentlichen kompensiert werden.

9. Verfahren nach Anspruch 9,
**dadurch gekennzeichnet**
**daß** insbesondere zur Steuerung bzw. Optimierung wenigstens eines Prozesses über eine entsprechende Beeinflussung mehrerer Prozeßparameter zumindest ein Teil der Kenngrößen bewertet oder gewichtet wird und die jeweilige Beeinflussung der Prozeßparameter in Abhängigkeit von den gewerteten bzw. gewichteten Kenngrößen erfolgt.

10. Verfahren nach einem der vorhergehenden Ansprüche,
**dadurch gekennzeichnet,**
**daß** wenigstens zwei Verfahrensstufen und/oder wenigstens zwei Prozesse miteinander kombiniert und zu einem jeweiligen gemeinsam gesteuerten und gemeinsam optimierten Modul zusammengefaßt werden.

11. Verfahren nach Anspruch 10,
**dadurch gekennzeichnet,**
**daß** eine komprimierte bzw. reduzierte Anzahl von in einem jeweiligen Modul gebildeten Kenngrößen zur Steuerung eines bzw. mehrerer Prozesse verwendet wird.

12. Verfahren nach einem der vorhergehenden Ansprüche,
**dadurch gekennzeichnet,**
**daß** zumindest ein Teil der Ziel- und Kenngrößen mittels eines Rechenwerks auf eine einheitliche Basis transformiert wird.

13. Verfahren nach Anspruch 12,
**dadurch gekennzeichnet,**
**daß** als einheitliche Basis der Preis pro Mengeneinheit gewählt wird.

14. Verfahren nach einem der vorhergehenden Ansprüche,
**dadurch gekennzeichnet,**
**daß** insbesondere bei kombinierten Verfahrensstufen und/oder kombinierten Prozessen als Zielgrößen vorzugsweise zumindest eine der folgenden Größen vorgegeben wird: konstante optische Eigenschaften, konstante Aschemenge, minimale und/oder konstante Schmutzpunkte, minimale Verluste, minimaler Einsatz von Chemikalien und/oder minimaler Energieeintrag.

15. Verfahren nach einem der vorhergehenden Ansprüche,
**dadurch gekennzeichnet,**
**daß** zumindest ein Teil der Zielgrößen vor deren Verwendung zur Steuerung und Optimierung des bzw. der Prozesse gewichtet wird.

16. Verfahren nach Anspruch 15,
**dadurch gekennzeichnet,**
**daß** die Gewichtung über eine Bewertung nach Kostengesichtspunkten und/oder die Durchführung einer Kostenoptimierung erfolgt.

17. Verfahren nach einem der vorhergehenden Ansprüche,
**dadurch gekennzeichnet,**
**daß** insbesondere bei kombinierten Verfahrensstufen und/oder kombinierten Prozessen zur Ermittlung wenigstens eines Teils der Meßwerte und Kenngrößen vorzugsweise zumindest eine der folgenden Größen erfaßt wird: Stoffdichten, Aschekonzentrationen, Füllstände, Überlaufmengen, Restdruckfarbenmengen, Restperoxidmengen, Temperaturen, pH-Werte, Dispergierarbeiten, Faserdimensionen, Chemikaliendosierungen, Verweilzeiten, optische Eigenschaften, mechanische Eigenschaften.

18. Verfahren nach einem der vorhergehenden Ansprüche,
**dadurch gekennzeichnet,**
**daß** zur Prozeßdurchführung eine elektronische Steuer- und/oder Regeleinrichtung verwendet wird.

19. Verfahren nach einem der vorhergehenden Ansprüche,
**dadurch gekennzeichnet,**
**daß** das jeweils verifizierte technologische Prozeß-Know-how in die Steuer- bzw. Regeleinrichtung integriert wird.

20. Verfahren nach einem der vorhergehenden Ansprüche,
**dadurch gekennzeichnet,**
**daß** mittels der Steuer- bzw. Regeleinrichtung unter Einbeziehung des jeweiligen technologischen Know-hows wiederholt insbesondere eine Kostenoptimierung durchgeführt wird.

21. Verfahren nach einem der vorhergehenden Ansprüche,
**dadurch gekennzeichnet,**
**daß** die Ermittlung zumindest eines Teils der Meßwerte und Kenngrößen über wenigstens einen Sensor, insbesondere wenigstens einen Sensor zur Weißgradmessung, Online-Schmutzmessung, Stoffdichtemessung, Durchflußmessung und/oder Niveaumessung erfolgt.
